# FASCICULE DE BREVET EUROPEEN

(11) **EP 3 059 892 B1**
(45) Date de publication et mention de la délivrance du brevet: **04.03.2020**
(21) Numéro de dépôt: 16156193.1
(22) Date de dépôt: 17.02.2016
(51) Int. Cl.: H04L 5/00

(54) **PROCÉDÉ DE TRANSMISSION D'UN PLAN DE FRÉQUENCES DANS UN SYSTÈME DE TÉLÉCOMMUNICATION**
VERFAHREN ZUM SENDEN EINES FREQUENZPLANS IN EINEM TELEKOMMUNIKATIONSSYSTEM
METHOD FOR TRANSMISSION OF A FREQUENCY PLAN IN A TELECOMMUNICATION SYSTEM

(30) Priorité: 19.02.2015 FR 1551405
(43) Date de publication de la demande: 24.08.2016
(73) Titulaire: COMMISSARIAT À L'ÉNERGIE ATOMIQUE ET AUX ÉNERGIES ALTERNATIVES, 75015 Paris (FR)
(72) Inventeur: NOGUET, Dominique, 38870 Saint-Simeo-De-Bressieux (FR); DORE, Jean-Baptiste, 38950 Saint-Martin-Le-Vinoux (FR)
(74) Mandataire: Cabinet Beaumont

(56) Documents cités:
- US-A1- 2010 124 254
- US-A1- 2012 051 309
- Seung June Yi et al.: "Radio Protocols for LTE and LTE-Advanced", 1 janvier 2012 (2012-01-01), Wiley, Singapore, XP002753035, pages 237-259, * page 246 *

## Description

### Domaine

La présente description concerne un procédé de transmission d'un plan de fréquences entre un dispositif maître et un dispositif esclave d'un système de télécommunication, par exemple un système de télédiffusion ou un réseau sans fil. La présente description concerne également un dispositif maître d'un système de télécommunication mettant en œuvre un tel procédé de transmission d'un plan de fréquences.

### Exposé de l'art antérieur

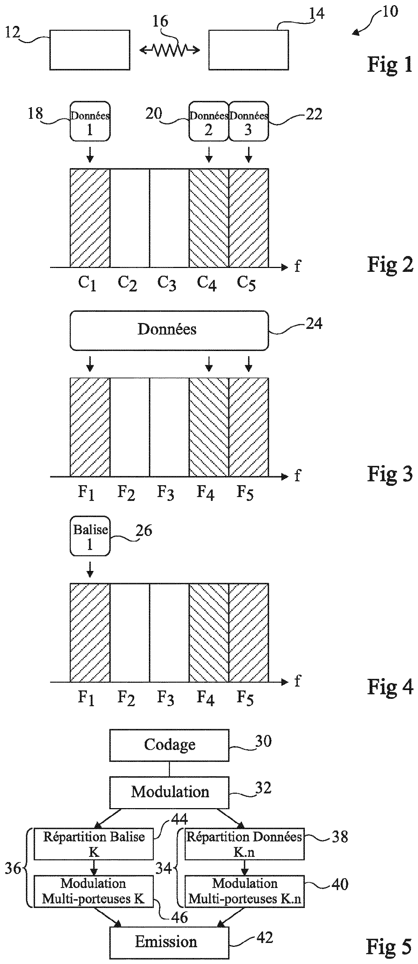

La figure 1 représente, de façon partielle et schématique, un système de télécommunication 10 comprenant un premier dispositif 12 adapté à transmettre des signaux à au moins un deuxième dispositif 14 par un canal de transmission 16, par exemple une liaison sans fil 16 ou une liaison filaire. Pour permettre la transmission simultanée de plusieurs signaux sur le système de télécommunication 10, le spectre des fréquences utilisables par le système de télécommunication 10 peut être divisé en canaux de transmission distincts, les signaux étant alors transmis sur différents canaux. On appelle plan de fréquences l'ensemble des informations décrivant la répartition fréquentielle des canaux utilisée par le dispositif 12 et qui doivent être connues du dispositif 14 pour communiquer, soit avec le dispositif 12, soit avec un(des) autre(s) dispositifs 14. Le plan de fréquences correspond au plan de répartition fréquentielle des canaux élémentaires utilisables du système de télécommunication 10, c'est-à-dire au plan de fréquences allouables du système de télécommunication 10. A titre d'exemple, le dispositif 12 peut modifier le plan de fréquences et est appelé dispositif maître tandis que le dispositif 14 doit suivre le plan de fréquences pour faire partie du système de télécommunication 10 et est appelé dispositif esclave. En particulier, le plan de fréquences peut indiquer les canaux sur lesquels le dispositif esclave 14 est autorisé à émettre. Le dispositif esclave 14, à sa première participation au système de télécommunication 10, n'a pas connaissance du plan de fréquences et doit le déterminer pour recevoir correctement les signaux émis par le dispositif maître 12, pour échanger des données à distance avec le dispositif maître 12 et/ou pour échanger des données avec un(des) autre(s) dispositif(s) esclave(s).

Un exemple de système de télécommunication 10 correspond à un système de télédiffusion dans lequel le dispositif maître 12 transmet de façon unilatérale des signaux vers un grand nombre de dispositifs esclaves 14. Le dispositif maître 12 peut alors correspondre à un émetteur de télévision et le dispositif esclave 14 peut alors correspondre à un téléviseur. Un autre exemple de système de télécommunication correspond à un réseau sans fil, par exemple un réseau de téléphonie mobile. Le dispositif maître 12 peut alors correspondre à un relai de téléphonie mobile (ou station de base) et le dispositif esclave 14 peut correspondre à un téléphone portable.

Le spectre de fréquences utilisé par le système de télécommunication 10 pour l'échange de signaux peut être divisé en N canaux de transmission distincts où N est un nombre entier. Seuls certains des N canaux de transmission peuvent être utilisés par les dispositifs 12, 14 du système de télécommunication 10.

La figure 2 représente, de façon schématique, un exemple d'un spectre de fréquences d'un système de télécommunication 10 comprenant cinq canaux de transmission C₁ à C₅. En outre, en figure 2, on a représenté de façon schématique un premier signal 18 transmis sur le canal C₁, un deuxième signal 20 transmis sur le canal C₄ et un troisième signal 22 transmis sur le canal C₅.

Lorsqu'un nouveau dispositif esclave souhaite participer au système de télécommunication 10, il ne connaît pas sur quels canaux sont transmis les signaux 18, 20, 22. Pour déterminer le plan de fréquences utilisé par le système de télécommunication 10, un procédé connu consiste, pour le dispositif esclave 14, à effectuer une opération de balayage en déterminant successivement pour chaque canal de transmission C₁ à C₅ si un signal est transmis sur ce canal de transmission et, lorsque cela est le cas, quelle est la nature de ce signal. Le plan de fréquences peut être stocké dans une mémoire du dispositif esclave 14. En considérant que le dispositif esclave 14 détermine la nature d'un signal transmis sur un canal en une durée Tₑ, la durée du balayage de tous les canaux du spectre de fréquences du système de télécommunication 10 est de N.Tₑ.

Pour certaines applications, le spectre de fréquences utilisé par le système de télécommunication 10 est divisé en canaux de transmission élémentaires et la transmission d'un signal est réalisée en modulant ce signal simultanément sur plusieurs canaux élémentaires. Dans ce but, une modulation multiporteuse peut être mise en œuvre. Le spectre de fréquences utilisé pour l'échange de signaux par les dispositifs 12, 14 du système de télécommunication 10 est appelé spectre fragmenté. En particulier, pour chaque signal transmis, les canaux élémentaires utilisés pour la transmission de ce signal peuvent être consécutifs ou disjoints. Ceci permet notamment de transmettre un signal large bande sur plusieurs canaux élémentaires disjoints ayant chacun une largeur de bande inférieure à celle du signal à transmettre. Du côté de la réception, le dispositif esclave 14 doit récupérer les données transmises sur chaque canal élémentaire utilisé pour la transmission pour pouvoir déterminer correctement le signal transmis. Le plan de fréquences identifie les canaux élémentaires utilisés pour la transmission de chaque signal pouvant être transmis par les dispositifs 12, 14 du système de télécommunication 10. Un exemple de spectre fragmenté correspond aux espaces blancs de la télévision ou TVWS (acronyme anglais pour Télévision White Spaces) dans lequel un dispositif esclave 14 est autorisé, dans certains pays, à émettre des signaux dans les plages de fréquences qui ne sont pas utilisées à d'autres fins, notamment pour la transmission des signaux de télévision.

La figure 3 représente, de façon schématique, un exemple d'un spectre de fréquences d'un système de télécommunication 10 à spectre fragmenté comprenant cinq canaux élémentaires F₁ à F₅. On a représenté un signal utile 24 qui est transmis par modulation simultanément sur les trois canaux élémentaires F₁, F₄ et F₅. Comme cela apparaît sur la figure 3, certains des canaux élémentaires utilisés pour la transmission du signal utile peuvent ne pas être contigus.

Il n'est pas envisageable pour un dispositif esclave 14 souhaitant faire partie du système de télécommunication 10 de mettre en œuvre le procédé de balayage décrit précédemment. En effet, si on considère que le spectre de fréquences est divisé en n canaux élémentaires, chaque canal élémentaire peut faire partie d'une combinaison de canaux élémentaires utilisés pour la transmission d'un signal ou non. Dans ce cas, pour le dispositif esclave 14, identifier les combinaisons de canaux élémentaires revient à tester N=2ⁿ-1 combinaisons. La durée de l'opération de balayage est alors égale N.Tₑ=(2ⁿ-1).Tₑ et devient excessive dès que le nombre de canaux élémentaires est élevé. A titre d'exemple, dans le cas du TVWS, la bande des Ultra Hautes Fréquences (UHF) utilisée s'étend en Europe de 470 MHz à 790 MHz et est divisée en 40 canaux de 8 MHz chacun. Si on considère qu'un canal de 8 MHz est utilisé en totalité ou n'est pas du tout utilisé pour la transmission d'un signal, la durée de l'opération de balayage est (2⁴⁰-1).Tₑ. Si on considère que chaque canal de 8MHz est lui-même divisé en canaux élémentaires de 2 MHz pouvant être utilisés séparément, la durée de l'opération de balayage devient (2¹⁶⁰-1).Tₑ. Même si on considère qu'un dispositif esclave ne peut pas adresser la totalité du spectre de fréquences mais, par exemple, seulement une fenêtre de 40 MHz à un instant donné, la durée de l'opération de balayage dans cette fenêtre est de (2²⁰-1).Tₑ avec un canal élémentaire de 2 MHz. Comme cette fenêtre peut occuper 141 positions, la durée totale de l'opération de balayage dans cette fenêtre est de 141.(2²⁰-1).Tₑ. Dans tous les exemples indiqués précédemment, la durée de balayage devient rapidement incompatible avec un fonctionnement convenable du système de télécommunication.

Un autre procédé connu consiste, pour le dispositif maître 12, à utiliser un canal de transmission dédié sur lequel est émis un signal spécifique, appelé balise, contenant le plan de fréquences. Il s'agit d'un canal de transmission déterminé dont la position dans le spectre de fréquences est connue du dispositif maître 12 et de chaque dispositif esclave 14. Ce canal dédié est utilisé pour échanger des informations de contrôle. Chaque dispositif esclave 14, souhaitant participer au système de télécommunication 10, récupère alors directement la balise sur ce canal dédié. Un inconvénient d'un tel procédé de transmission du plan de fréquences est qu'une partie des ressources spectrales disponibles du système de télécommunication 10 est utilisée uniquement par le canal dédié à la transmission de la balise. Toutefois, les ressources spectrales peuvent être limitées et la réservation d'une partie des ressources spectrales à un canal dédié à la transmission de la balise peut ne pas être possible, ou à minima inefficace.

Le document US 2010/124254 décrit des procédés et systèmes de distribution de signaux sur un espace libre du spectre.

### Résumé

La présente demande vise à pallier tout ou partie des inconvénients des procédés de transmission d'un plan de fréquences utilisé par un système de télécommunication à spectre fragmenté décrits précédemment.

Un autre objet d'un mode de réalisation est de permettre la récupération d'un plan de fréquences par un dispositif esclave d'un système de télécommunication à spectre fragmenté en une durée réduite.

Un autre objet d'un mode de réalisation est de ne pas nécessiter un canal dédié à la transmission d'une balise contenant le plan de fréquences.

L'invention est définie dans les revendications indépendantes.

Ainsi, un mode de réalisation prévoit un procédé de transmission de données à distance sur un spectre de fréquences divisé en une pluralité de canaux élémentaires distincts, entre un premier dispositif et un deuxième dispositif, comprenant la transmission par le premier dispositif d'un premier signal comprenant une succession de premières données par modulation des premières données simultanément sur plusieurs canaux élémentaires de la pluralité de canaux élémentaires et la transmission d'un deuxième signal représentatif d'un plan d'utilisation de la pluralité des canaux élémentaires comprenant une succession de deuxièmes données au moins par modulation de toutes les deuxièmes données sur un canal élémentaire unique parmi lesdits plusieurs canaux élémentaires.

Selon un mode de réalisation, la modulation est une modulation multiporteuse.

Selon un mode de réalisation, le deuxième dispositif détermine successivement, pour chaque canal élémentaire parmi au moins certains canaux élémentaires de la pluralité de canaux élémentaires, si toutes les deuxièmes données ont été transmises par modulation sur ledit canal élémentaire.

Selon un mode de réalisation, le procédé comprend la transmission du deuxième signal indépendamment par modulation de toutes les deuxièmes données sur chacun d'au moins deux canaux élémentaires uniques parmi la pluralité de canaux élémentaires.

Selon un mode de réalisation, chaque canal élémentaire comprend des porteuses, le procédé comprenant une étape de détermination de premiers symboles à partir des premières données, une étape de répartition des premiers symboles sur des premières porteuses associées à plusieurs canaux élémentaires de la pluralité de canaux élémentaires et une étape de modulation des premières porteuses avec les premiers symboles, le procédé comprenant, en outre, une étape de détermination de deuxièmes symboles à partir des deuxièmes données, une étape de répartition des deuxièmes symboles sur au moins des deuxièmes porteuses associées audit canal élémentaire unique et une étape de modulation des deuxièmes porteuses avec les deuxièmes symboles.

Selon un mode de réalisation, le procédé comprend la modulation des porteuses autres que les deuxièmes porteuses avec un symbole d'absence de transmission de données.

Selon un mode de réalisation, le procédé comprend la modulation avec les deuxièmes symboles au moins de troisièmes porteuses différentes des deuxièmes porteuses et contenues dans un canal élémentaire différent dudit canal élémentaire unique.

Selon un mode de réalisation, le procédé comprend, en outre, une étape de transmission de quatrièmes données représentatives d'un nouveau plan d'utilisation de la pluralité des canaux élémentaires par modulation sur ledit canal élémentaire unique et représentatives d'un instant de début d'utilisation du nouveau plan d'utilisation et, à partir dudit instant, la transmission de cinquièmes données représentatives du nouveau plan d'utilisation par modulation des cinquièmes données sur un nouveau canal élémentaire unique différent dudit canal élémentaire unique.

Selon un mode de réalisation, la modulation est une modulation OFDM, une modulation FBMC ou une modulation UFMC.

Selon un mode de réalisation, au moins deux canaux élémentaires desdits plusieurs canaux élémentaires sont séparés par au moins un canal élémentaire de la pluralité de canaux élémentaires sur lequel ne sont pas modulées les premières données.

Un mode de réalisation prévoit également un dispositif de transmission de données à distance sur un spectre de fréquences divisé en une pluralité de canaux élémentaires distincts comprenant un circuit adapté à transmettre un premier signal comprenant une succession de premières données par modulation des premières données simultanément sur plusieurs canaux élémentaires de la pluralité de canaux élémentaires et adapté à transmettre un deuxième signal représentatif d'un plan d'utilisation de la pluralité des canaux élémentaires comprenant une succession de deuxièmes données au moins par modulation de toutes les deuxièmes données sur un canal élémentaire unique parmi lesdits plusieurs canaux élémentaires.

Un mode de réalisation prévoit également un système de transmission de données à distance sur un spectre de fréquences divisé en une pluralité de canaux élémentaires, comprenant au moins un premier dispositif tel que défini précédemment et au moins un deuxième dispositif adapté à déterminer successivement, pour chaque canal élémentaire parmi au moins certains canaux élémentaires de la pluralité de canaux élémentaires, si toutes les deuxièmes données ont été transmises par modulation sur ledit canal élémentaire.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente, de façon partielle et schématique, deux dispositifs d'un système de télécommunication ;
la figure 2, décrite précédemment, représente, de façon partielle et schématique, un exemple d'un spectre de fréquences mis en œuvre par un système de télécommunication à spectre non fragmenté ;
la figure 3, décrite précédemment, représente, de façon partielle et schématique, un exemple d'un spectre d'émission de fréquences mis en œuvre par un système de télécommunication à spectre fragmenté, avec une répartition des données sur plusieurs fragments ;
la figure 4 illustre, de façon partielle et schématique, le principe d'un mode de réalisation d'un procédé de transmission d'un plan de fréquences par un système de télécommunication à spectre fragmenté avec la transmission d'une balise sur un fragment unique ;
la figure 5 représente, sous la forme d'un schéma-bloc, un mode de réalisation d'un procédé de transmission d'un plan de fréquences selon le principe illustré en figure 4 ;
la figure 6 représente, sous la forme d'un schéma-bloc, un mode de réalisation d'un procédé de réception de données par un dispositif esclave d'un système de télécommunication à spectre fragmenté ;
la figure 7 illustre, de façon partielle et schématique, le principe d'un autre mode de réalisation d'un procédé de transmission d'un plan de fréquences dans une balise par un système de télécommunication à spectre fragmenté ;
la figure 8 représente, sous la forme d'un schéma-bloc, un autre mode de réalisation d'un procédé de transmission d'un plan de fréquences selon le principe illustré en figure 7 ;
la figure 9 illustre, de façon partielle et schématique, le principe d'un autre mode de réalisation d'un procédé de transmission d'un plan de fréquences par un système de télécommunication à spectre fragmenté avec duplication de la balise sur chaque fragment ;
la figure 10 représente, sous la forme d'un schéma-bloc, un autre mode de réalisation d'un procédé de transmission d'un plan de fréquences selon le principe illustré en figure 9 ; et
la figure 11 représente, sous la forme d'un schéma-bloc, un mode de réalisation d'un procédé de mise à jour d'un plan de fréquences sur un réseau sans fil à spectre fragmenté.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. En particulier, les procédés de codage, de modulation d'amplitude ou de phase, de modulation multiporteuse sont bien connus de l'homme du métier et ne sont pas décrits en détail. Sauf précision contraire, les expressions "approximativement", "sensiblement", et "de l'ordre de" signifient à 10 % près, de préférence à 5 % près. Dans la suite de la description, sauf indication contraire, on désigne par "signaux utiles" les signaux transmis par le dispositif maître autres que la balise. Dans la suite de la description, pour un procédé de modulation multiporteuse, on appelle "symbole numérique" le symbole qui est modulé sur une porteuse. Dans le cas particulier d'une modulation multiporteuse, par exemple une modulation par codage de signaux numériques par répartition en fréquences orthogonales sous forme de multiples porteuses ou modulation OFDM (acronyme anglais pour Orthogonal Frequency-Division Multiplexing), ou tout autre modulation utilisant un multiplexage par porteuse, notamment une modulation multiporteuse à base de banque de filtres ou modulation FBMC (acronyme anglais pour Filter Bank Multicarrier), ou une modulation UFMC (acronyme anglais pour Universal Filtered Multicarrier), on appelle "symbole multiporteuse" le vecteur dont les composantes correspondent aux symboles numériques transmis simultanément sur différentes porteuses. En outre, on appelle "symbole '0'" un symbole numérique entraînant l'absence de transmission de données après modulation.

Selon un mode de réalisation d'un procédé de transmission de signaux par un système de télécommunication à spectre fragmenté, il n'est pas utilisé un canal dédié à la transmission d'une balise contenant le plan de fréquences. La balise est transmise sur le spectre de fréquences utilisé par ailleurs pour la transmission des signaux utiles. Toutefois, la balise est transmise par le dispositif maître 12 en totalité sur un unique canal élémentaire alors que chaque autre signal utile peut être transmis par modulation simultanée sur plusieurs canaux élémentaires. Le canal élémentaire unique utilisé pour la transmission de la balise peut également être utilisé, avec d'autres canaux élémentaires, pour la transmission d'un signal utile. De ce fait, un dispositif esclave 14 souhaitant connaître le plan de fréquences utilisé par le système de télécommunication 10 à spectre fragmenté balaye successivement chaque canal élémentaire jusqu'à réception de la balise. Le dispositif esclave 14 détermine le plan de fréquences après démodulation et décodage de la balise et peut stocker en mémoire le plan de fréquences ainsi déterminé. Le dispositif esclave n'a donc pas à examiner toutes les combinaisons des canaux élémentaires mais n'a qu'à balayer les n canaux élémentaires formant le spectre de fréquences utilisé par le système de télécommunication 10. La durée maximale du procédé de détermination du plan de fréquence est donc réduite à n.Tₑ.

La figure 4 illustre le principe du mode de réalisation décrit précédemment. La référence 26 désigne une balise 26 qui est transmise par le dispositif maître sur un seul canal élémentaire, le canal élémentaire F₁ à titre d'exemple en figure 4 alors que le reste des données est transmis selon le principe illustré en figure 3.

Selon un mode de réalisation, le procédé de transmission de données à distance met en œuvre un procédé de modulation multiporteuse, par exemple une modulation OFDM, une modulation FBMC ou une modulation UFMC. Dans un tel procédé, un signal est transmis par modulation simultanée de plusieurs porteuses. Chaque canal élémentaire peut comprendre plusieurs porteuses. Dans le cas d'un spectre fragmenté, un signal utile peut être émis en utilisant seulement les porteuses qui sont dans des canaux élémentaires autorisés par le plan de fréquences et en "éteignant" les porteuses qui sont dans des canaux élémentaires non autorisés par le plan de fréquences. Selon un mode de réalisation, la balise est transmise en totalité en n'utilisant que les porteuses d'un seul canal élémentaire tandis que les signaux utiles peuvent être transmis en modulant simultanément les porteuses de plusieurs canaux élémentaires, et notamment des canaux élémentaires qui peuvent être disjoints.

La figure 5 représente, sous forme d'un schéma-bloc, un mode de réalisation d'un procédé de transmission d'une balise ou de signaux utiles par le dispositif maître 12.

A l'étape 30, le dispositif maître 12 réalise une opération de codage des données numériques à transmettre. L'étape de codage peut comprendre, par exemple un codage convolutif. Le procédé se poursuit à l'étape 32.

A l'étape 32, le dispositif maître 12 réalise une première modulation des données numériques codées pour fournir des symboles numériques. La première modulation peut correspondre à une modulation de phase et/ou d'amplitude, par exemple une modulation d'amplitude en quadrature ou modulation QAM (acronyme anglais pour Quadrature Amplitude Modulation) ou une modulation par changement de phase ou modulation PSK (acronyme anglais pour Phase-Shift Keying). Dans le cas où les symboles numériques fournis à l'étape 32 sont destinés à former un signal utile, le procédé se poursuit à l'étape 34. Dans les cas où les symboles numériques fournis à l'étape 32 sont destinés à former une balise, le procédé se poursuit à l'étape 36.

A l'étape 34, le dispositif maître 12 réalise une deuxième modulation des symboles numériques fournis à l'étape 32 qui permet leur émission simultanée sur plusieurs canaux élémentaires. La deuxième modulation peut être n'importe quel type de modulation, par exemple une modulation à déplacement minimum gaussien ou modulation GMSK (acronyme anglais pour Gaussian Minimum Shift Keying) ou une modulation à étalement de spectre. De préférence, la deuxième modulation est une modulation multiporteuse sur des porteuses réparties sur plusieurs canaux élémentaires. Dans ce cas, l'étape 34 comprend une première étape 38 dans laquelle les symboles numériques fournis à l'étape 32 peuvent être répartis sur plusieurs porteuses qui appartiennent à plusieurs canaux élémentaires. Dans le cas où le spectre peut être divisé en n canaux élémentaires comprenant chacun K porteuses, les symboles numériques fournis à l'étape 32 sont répartis à l'étape 38 sur K.n porteuses. Le symbole numérique '0' est attribué aux porteuses appartenant à des canaux élémentaires non autorisés. L'étape 34 comprend, en outre, une étape 40 pendant laquelle le dispositif maître 12 réalise la modulation multiporteuse proprement dite. Dans le cas d'une modulation OFDM, l'étape 40 peut comprendre la détermination d'une transformée de Fourier rapide inverse ou IFFT (acronyme anglais pour Inverse Fast Fourrier Transform) des symboles numériques répartis à l'étape 38 sur un nombre K.n de porteuses. Le procédé se poursuit à l'étape 42.

A l'étape 42, les porteuses modulées sont émises par une antenne. Selon un mode de réalisation, l'émission vers l'antenne est précédée d'une étape de transposition de fréquence par un étage radiofréquence.

A l'étape 36, le dispositif maître 12 réalise une modulation des symboles numériques fournis à l'étape 32 qui permet leur émission sur un seul canal élémentaire. A titre d'exemple, cette modulation est une modulation multiporteuse sur des porteuses réparties sur un seul canal élémentaire. Dans ce cas, l'étape 36 comprend une première étape 44 dans laquelle les symboles numériques fournis à l'étape 32 sont répartis sur plusieurs porteuses qui appartiennent à un seul canal élémentaire. Dans le cas où le spectre peut être divisé en n canaux élémentaires comprenant chacun K porteuses, les symboles numériques fournis à l'étape 32 sont répartis à l'étape 44 sur K porteuses appartenant à un seul canal élémentaire. L'étape 36 comprend, en outre, une étape 46 à laquelle le dispositif maître 12 réalise la modulation multiporteuse proprement dite. Dans le cas d'une modulation OFDM, l'étape 46 peut comprendre la détermination d'une IFFT des symboles numériques répartis à l'étape 44 sur un nombre K de porteuses. Le procédé se poursuit à l'étape 42.

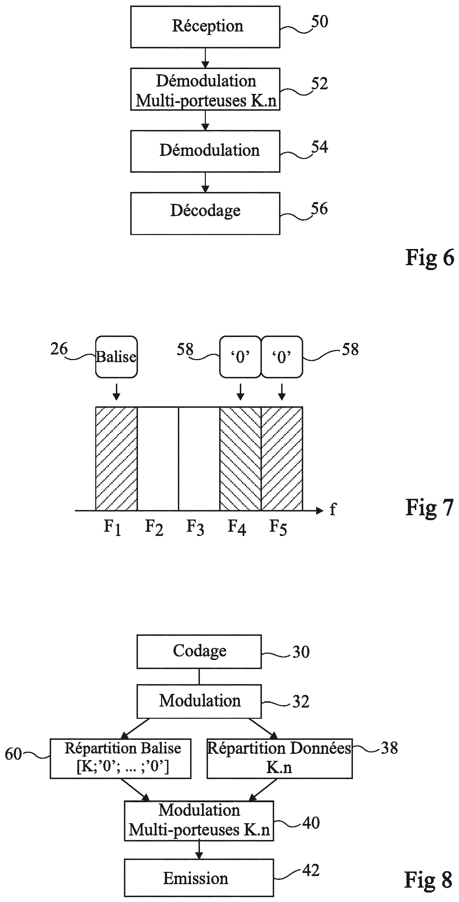

La figure 6 représente, sous la forme d'un schéma-bloc, les étapes d'un mode de réalisation d'un procédé de réception par le dispositif esclave 14 de signaux émis par le dispositif maître 12.

A l'étape 50, les signaux émis par le dispositif maître 12 sont reçus par le dispositif esclave 14. Le procédé de réception se poursuit à l'étape 52.

A l'étape 52, le dispositif esclave 14 réalise une première démodulation qui correspond à la fonction inverse de la deuxième modulation mise en œuvre par le dispositif maître 12. A titre d'exemple, la première démodulation est une démodulation multiporteuse sur un nombre K.n de porteuses. Dans le cas d'une démodulation OFDM, l'étape 52 peut comprendre une étape de détermination d'une transformée de Fourier rapide ou FFT (acronyme anglais pour Fast Fourrier Transform) sur K.n porteuses et une étape d'échantillonnage fournissant une succession de symboles numériques. Le procédé se poursuit à l'étape 54.

A l'étape 54, le dispositif esclave 14 réalise une deuxième démodulation des symboles numériques fournis à l'étape 52 qui correspond à la fonction inverse de la première modulation mise en œuvre par le dispositif maître 12. Le procédé se poursuit à l'étape 56.

A l'étape 56, le dispositif esclave 14 réalise une opération de décodage des données binaires obtenues à l'étape 54 qui correspond à la fonction inverse du codage mis en œuvre par le dispositif maître 12 à l'étape 30 décrite précédemment.

Selon un mode de réalisation, le même procédé de réception est mis en œuvre par le dispositif esclave 14 que les signaux transmis par le dispositif maître 12 correspondent à une balise ou à des signaux utiles. Par exemple, dans le cas où une modulation OFDM sur K.n porteuses est mise en œuvre à l'étape 40, l'étape 54 peut comprendre la détermination d'une FFT sur une fenêtre correspondant à K.n porteuses et qui, après échantillonnage, fournit, pour chaque symbole multiporteuse, K.n symboles numériques associés aux n canaux élémentaires. Pour rechercher une balise, le dispositif esclave 14 peut déterminer, pour chaque canal élémentaire, si les symboles numériques transmis successivement pour ce canal élémentaire correspondent, après l'étape de démodulation 54 et l'étape de décodage 56, à la balise. En considérant que le dispositif esclave 14 peut déterminer qu'une balise est transmise sur un canal élémentaire en une durée Tₑ, la durée maximale du balayage est de n.Tₑ.

Selon un autre mode de réalisation, lors de la recherche de la balise, le dispositif esclave 14 peut mettre en œuvre, à l'étape 52, une démodulation multiporteuse différente de celle mise en œuvre pour la réception de signaux utiles. Dans le cas où une modulation OFDM est mise en œuvre à l'étape 40, l'étape 54 peut alors comprendre la détermination d'une FFT sur une fenêtre correspondant à K porteuses associées à un seul canal élémentaire et qui fournit, après échantillonnage, K symboles numériques associés à ce canal élémentaire. De préférence, K est une puissance de 2. Pour rechercher une balise, le dispositif esclave 14 peut déterminer successivement, pour chaque canal élémentaire, si les symboles numériques transmis pour ce canal élémentaire correspondent, après l'étape de démodulation 54 et l'étape de décodage 56, à la balise. En considérant que le dispositif esclave 14 peut déterminer qu'une balise est transmise sur un canal élémentaire en une durée Tₑ, la durée du balayage est de n.Tₑ.

La durée de l'opération de balayage est dont réduite par rapport au cas où la balise serait transmise, comme les signaux utiles, par modulation simultanée sur plusieurs canaux élémentaires.

Selon un mode de réalisation, la balise est transmise régulièrement, par exemple de façon périodique, par le dispositif maître 12. Ceci permet à un dispositif esclave 14 souhaitant participer au système de télécommunication 10 de pouvoir obtenir rapidement le plan de fréquences. De préférence, la balise est transmise sur le même canal de transmission élémentaire tant que le plan de fréquences n'est pas modifié.

La figure 7 illustre le principe d'un autre mode de réalisation d'un procédé de transmission d'une balise sur un spectre fragmenté. Dans ce mode de réalisation, la balise 26 est fournie par le dispositif maître 12 sur un seul canal élémentaire, par exemple le canal élémentaire F₁ en figure 7, et un symbole numérique '0' est transmis sur chaque autre canal élémentaire comme cela est indiqué par la référence 58 en figure 7.

La figure 8 représente, sous la forme d'un schéma-bloc, un mode de réalisation d'un procédé de transmission d'une balise et de signaux utiles par le dispositif maître 12 selon le principe illustré en figure 7.

Le procédé comprend les étapes 30, 32, 38, 40 et 42 décrites précédemment. L'étape 36 décrite précédemment est remplacée par une étape 60 pendant laquelle les symboles numériques fournis à l'étape 32 et correspondant à une balise sont répartis sur K porteuses associées à un canal élémentaire unique tandis que le symbole numérique '0' est réparti sur les porteuses des autres canaux élémentaires afin de former un vecteur de taille K.n. Le procédé se poursuit à l'étape 40, décrite précédemment, dans lequel une modulation multiporteuse sur K.n porteuses est réalisée.

Un avantage du présent mode de réalisation par rapport au mode de réalisation décrit précédemment en relation avec la figure 5 est que le même procédé de modulation multiporteuse peut être mis en œuvre que les symboles numériques à transmettre correspondent à une balise ou à des signaux utiles. En particulier, dans le cas d'une modulation multiporteuse de type OFDM, la détermination d'une transformée de Fourier rapide inverse sur K.n porteuses peut être réalisée à la fois pour la transmission de signaux utiles et la transmission d'une balise.

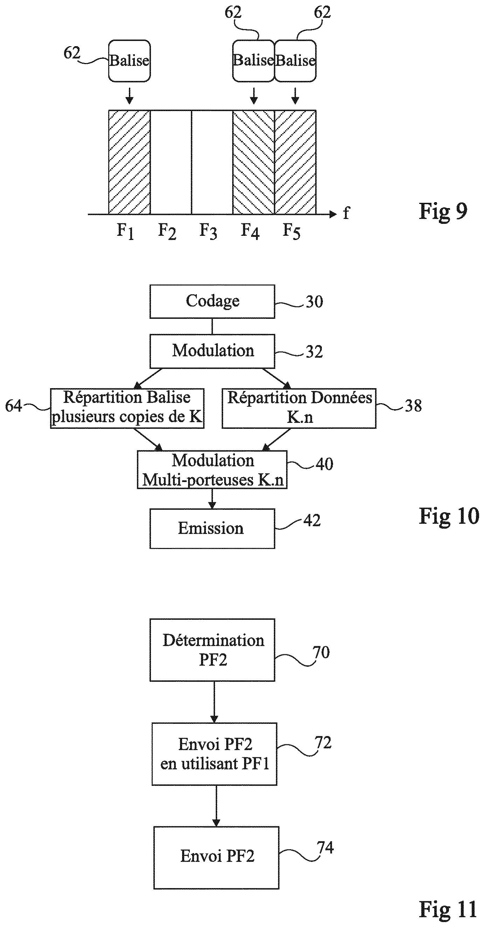

La figure 9 illustre le principe d'un autre mode de réalisation d'un procédé de transmission d'une balise sur un spectre fragmenté. Dans ce mode de réalisation, la balise 62 est fournie par le dispositif maître 12 indépendamment sur chaque canal élémentaire sur lequel une transmission est autorisée. De ce fait, lors de la recherche de la balise par le dispositif esclave 14, si la balise n'est pas réceptionnée correctement sur l'un des canaux élémentaires, le dispositif esclave 14 peut déterminer la balise à partir des symboles numériques transmis sur un autre canal élémentaire. La robustesse de transmission de la balise est ainsi augmentée.

La figure 10 représente, sous la forme d'un schéma-bloc, un mode de réalisation d'un procédé de transmission d'une balise et de signaux utiles par le dispositif maître 12 selon le principe illustré en figure 9.

Le procédé comprend l'ensemble des étapes du mode de réalisation décrit précédemment en relation avec la figure 8 à la différence que l'étape 60 est remplacée par une étape 64 dans laquelle les symboles numériques correspondant à une balise sont répétés sur les porteuses de chaque canal élémentaire autorisé. Le symbole '0' peut être réparti sur les porteuses des canaux élémentaires non autorisés afin de former un vecteur de taille K.n.

La transmission de la balise par le dispositif maître 12 peut être réalisée de façon répétée, par exemple de façon périodique.

Dans tous les modes de réalisation exposés, une fois que la balise a été déterminée, le dispositif esclave 14 extrait le plan de fréquences de la balise et peut recevoir de façon correcte les signaux utiles fournis par le dispositif maître 12 et/ou échanger des données avec le dispositif maître ou avec un autre dispositif esclave 14.

Pour certaines applications, le plan de fréquences utilisé par le dispositif maître 12 est susceptible d'être modifié. Une modification du plan de fréquences peut notamment se traduire par le fait qu'un nouveau plan de fréquences est transmis sur un canal élémentaire différent de l'ancien plan de fréquences.

Il est souhaitable que les dispositifs esclaves 14 qui participent déjà au système de télécommunication 10 n'aient pas à effectuer une nouvelle opération de recherche de balise lors de la transmission du nouveau plan de fréquences. En effet, une telle opération pourrait se traduire par une interruption de la réception de signaux utiles par les dispositifs esclaves 14 participant déjà au système de télécommunication 10.

La figure 11 représente, sous la forme d'un schéma-bloc, un mode de réalisation d'un procédé de transmission par le dispositif maître 12 successivement d'un premier plan de fréquences PF1 et d'un deuxième plan de fréquences PF2.

A l'étape 70, le dispositif maître détermine un nouveau plan de fréquences PF2 tout en continuant à transmettre, par exemple à intervalle régulier, une balise contenant le plan de fréquences PF1. La balise contenant le plan de fréquences PF1 est donc transmise sur le canal élémentaire prévu pour cela par le plan de fréquences PF1. L'étape 70 peut être déclenchée lorsque le dispositif maître 12 doit utiliser un nouveau plan de fréquences. A titre d'exemple, dans le cas du TVWS, le dispositif maître 12 peut correspondre à un dispositif d'émission de signaux dans les espaces blancs et la requête d'utilisation d'un nouveau plan de fréquences peut être transmise au dispositif maître 12 par une base de données, des éléments d'analyse de spectre ou un organisme officiel de régulation. Cette situation peut être rencontrée par exemple lorsque le dispositif maître est mobile et traverse des zones où les espaces blancs autorisés diffèrent. Le procédé se poursuit à l'étape 72.

A l'étape 72, alors que le premier plan de fréquences PF1 est toujours en utilisation, le procédé transmet le plan de fréquences PF2 avec la balise utilisée jusqu'alors pour transmettre le plan de fréquences PF1 en précisant un instant de référence à partir duquel le plan de fréquence PF2 devra être utilisé. Cette balise modifiée contenant le plan de fréquences PF2 est donc transmise sur le canal élémentaire prévu pour cela par le plan de fréquences PF1. Le procédé se poursuit à l'étape 74.

A l'étape 74, après l'instant de référence, le dispositif maître 12 utilise le plan de fréquences PF2 et transmet une balise contenant le plan de fréquences PF2 en utilisant le canal élémentaire prévu pour cela par le plan de fréquences PF2.

Divers modes de réalisation avec diverses variantes ont été décrits ci-dessus. On notera que l'homme de l'art pourra combiner divers éléments de ces divers modes de réalisation et variantes sans faire preuve d'activité inventive. A titre d'exemple, le mode de réalisation décrit précédemment en relation avec la figure 11 de transition d'un premier plan de fréquences à un deuxième plan de fréquences peut être mis en œuvre avec n'importe lequel des modes de réalisation de procédés de transmission du plan de fréquences décrits précédemment en relation avec les figures 5, 8 et 10. En outre, les modes de réalisation particuliers décrits précédemment pour une modulation OFDM peuvent être adaptés à d'autres types de modulations multiporteuse, notamment une modulation FBMC ou UFMC.

## Revendications

1. Procédé de transmission de données à distance sur un spectre de fréquences divisé en une pluralité de canaux élémentaires distincts, entre un premier dispositif (12) et un deuxième dispositif (14), **caractérisé en ce qu'**il comprend la transmission par le premier dispositif d'un premier signal comprenant une succession de premières données par modulation des premières données simultanément sur plusieurs canaux élémentaires de la pluralité de canaux élémentaires et la transmission d'un deuxième signal représentatif d'un plan de répartition fréquentielle des canaux élémentaires utilisés de la pluralité des canaux élémentaires pour la transmission du premier signal, comprenant une succession de deuxièmes données au moins par modulation de toutes les deuxièmes données sur un canal élémentaire parmi lesdits plusieurs canaux élémentaires, le procédé comprenant, en outre, une étape de transmission de quatrièmes données représentatives d'un nouveau plan de répartition fréquentielle des canaux élémentaires utilisés de la pluralité des canaux élémentaires par modulation sur ledit canal élémentaire et représentatives d'un instant de début d'utilisation du nouveau plan et, à partir dudit instant, la transmission de cinquièmes données représentatives du nouveau plan par modulation des cinquièmes données sur un nouveau canal élémentaire différent dudit canal élémentaire.

2. Procédé selon la revendication 1, dans lequel la modulation est une modulation multiporteuse.

3. Procédé selon la revendication 1 ou 2, dans lequel le deuxième dispositif (14) détermine successivement, pour chaque canal élémentaire parmi au moins certains canaux élémentaires de la pluralité de canaux élémentaires, si toutes les deuxièmes données ont été transmises par modulation sur ledit canal élémentaire.

4. Procédé selon l'une quelconque des revendications 1 à 3, comprenant la transmission du deuxième signal indépendamment par modulation de toutes les deuxièmes données sur chacun d'au moins deux canaux élémentaires parmi la pluralité de canaux élémentaires.

5. Procédé selon l'une quelconque des revendications 1 à 4, dans lequel chaque canal élémentaire comprend des porteuses, le procédé comprenant une étape de détermination de premiers symboles à partir des premières données, une étape de répartition des premiers symboles sur des premières porteuses associées aux plusieurs canaux élémentaires de la pluralité de canaux élémentaires et une étape de modulation des premières porteuses avec les premiers symboles, le procédé comprenant, en outre, une étape de détermination de deuxièmes symboles à partir des deuxièmes données, une étape de répartition des deuxièmes symboles sur au moins des deuxièmes porteuses associées audit canal élémentaire et une étape de modulation des deuxièmes porteuses avec les deuxièmes symboles.

6. Procédé selon la revendication 5, comprenant la modulation des porteuses autres que les deuxièmes porteuses avec un symbole d'absence de transmission de données.

7. Procédé selon la revendication 5, comprenant la modulation avec les deuxièmes symboles au moins de troisièmes porteuses différentes des deuxièmes porteuses et contenues dans un canal élémentaire différent dudit canal élémentaire.

8. Procédé selon l'une quelconque des revendications 1 à 7, dans lequel la modulation est une modulation OFDM, une modulation FBMC ou une modulation UFMC.

9. Procédé selon l'une quelconque des revendications 1 à 7, dans lequel au moins deux canaux élémentaires desdits plusieurs canaux élémentaires sont séparés par au moins un canal élémentaire de la pluralité de canaux élémentaires sur lequel ne sont pas modulées les premières données.

10. Dispositif (12) de transmission de données à distance sur un spectre de fréquences divisé en une pluralité de canaux élémentaires distincts, **caractérisé en ce qu'**il comprend un circuit adapté à transmettre un premier signal comprenant une succession de premières données par modulation des premières données simultanément sur plusieurs canaux élémentaires de la pluralité de canaux élémentaires et adapté à transmettre un deuxième signal représentatif d'un plan de répartition fréquentielle des canaux élémentaires utilisés de la pluralité des canaux élémentaires pour la transmission du premier signal, comprenant une succession de deuxièmes données au moins par modulation de toutes les deuxièmes données sur un canal élémentaire parmi lesdits plusieurs canaux élémentaires, le circuit étant, en outre, adapté à transmettre des quatrièmes données représentatives d'un nouveau plan de répartition fréquentielle des canaux élémentaires utilisés de la pluralité des canaux élémentaires par modulation sur ledit canal élémentaire et représentatives d'un instant de début d'utilisation du nouveau plan et, à partir dudit instant, à transmettre des cinquièmes données représentatives du nouveau plan par modulation des cinquièmes données sur un nouveau canal élémentaire différent dudit canal élémentaire.

11. Système (10) de transmission de données à distance sur un spectre de fréquences divisé en une pluralité de canaux élémentaires, comprenant au moins un premier dispositif (12) selon la revendication 10 et au moins un deuxième dispositif (14) adapté à déterminer successivement, pour chaque canal élémentaire parmi au moins certains canaux élémentaires de la pluralité de canaux élémentaires, si toutes les deuxièmes données ont été transmises par modulation sur ledit canal élémentaire.

## Patentansprüche

1. Ein Verfahren zur Fern-Datenübertragung über ein Frequenzspektrum, das in eine Vielzahl von verschiedenen elementaren Kanälen unterteilt ist, zwischen einer ersten Vorrichtung (12) und einer zweiten Vorrichtung (14), **dadurch gekennzeichnet, dass** es die Übertragung eines ersten Signals durch die erste Vorrichtung aufweist, das eine Folge von ersten Daten aufweist durch Modulation der ersten Daten gleichzeitig über eine Anzahl von elementaren Kanälen der Vielzahl von elementaren Kanälen und dass es die Übertragung eines zweiten Signals aufweist, das für einen Plan der Frequenzzuweisung der verwendeten elementaren Kanäle der Vielzahl von elementaren Kanälen für die Übertragung des ersten Signals repräsentativ ist, aufweisend eine Folge von zweiten Daten, zumindest durch Modulation aller zweiten Daten über einen elementaren Kanal aus der genannten Anzahl der elementaren Kanäle, wobei das Verfahren ferner einen Schritt des Übertragens von vierten Daten aufweist, die für einen neuen Plan der Frequenzzuweisung der verwendeten elementaren Kanäle der Vielzahl der elementaren Kanäle repräsentativ sind, durch Modulation auf dem genannten elementaren Kanal und repräsentativ für eine Zeit des Beginns der Nutzung des neuen Plans, und ab diesem Zeitpunkt Übertragen von fünften Daten, die für den neuen Plan repräsentativ sind, durch Modulation der fünften Daten über einen neuen elementaren Kanal unterschiedlich von dem genannten elementaren Kanal.

2. Das Verfahren nach Anspruch 1, wobei die Modulation eine Mehrträgermodulation ist.

3. Das Verfahren nach Anspruch 1 oder 2, wobei die zweite Vorrichtung (14) nacheinander für jeden elementaren Kanal aus mindestens gewissen elementaren Kanälen der Vielzahl von elementaren Kanälen bestimmt, ob alle zweiten Daten durch Modulation über den genannten elementaren Kanal übertragen wurden.

4. Das Verfahren nach einem der Ansprüche 1 bis 3, aufweisend Übertragen des zweiten Signals durch Modulation aller zweiten Daten unabhängig über jeden der mindestens zwei elementaren Kanäle aus der Vielzahl der elementaren Kanäle.

5. Das Verfahren nach einem der Ansprüche 1 bis 4, wobei jeder elementare Kanal Träger aufweist, wobei das Verfahren einen Schritt zum Bestimmen erster Symbole basierend auf ersten Daten aufweist, einen Schritt zum Verteilen der ersten Symbole über erste Träger, die der Anzahl der elementaren Kanäle der Vielzahl der elementaren Kanäle zugeordnet sind, und einen Schritt zum Modulieren der ersten Träger mit den ersten Symbolen, wobei das Verfahren ferner einen Schritt zum Bestimmen zweiter Symbole basierend auf den zweiten Daten aufweist, einen Schritt zum Verteilen der zweiten Symbole über mindestens zweite Träger, die dem genannten elementaren Kanal zugeordnet sind, und einen Schritt zum Modulieren der zweiten Träger mit den zweiten Symbolen.

6. Das Verfahren nach Anspruch 5, aufweisend Modulieren der von den zweiten Trägern verschiedenen Trägern mit einem Keine-Daten-Übertragung-Symbol.

7. Das Verfahren nach Anspruch 5, aufweisend Modulieren mit den zweiten Symbolen von mindestens dritten Trägern, die sich von den zweiten Trägern unterscheiden und in einem elementaren Kanal enthalten sind, der sich von dem genannten elementaren Kanal unterscheidet.

8. Das Verfahren nach einem der Ansprüche 1 bis 7, wobei die Modulation eine OFDM-Modulation, eine FBMC-Modulation oder eine UFMC-Modulation ist.

9. Das Verfahren nach einem der Ansprüche 1 bis 7, wobei mindestens zwei elementare Kanäle der genannten Anzahl der elementaren Kanäle durch mindestens einen elementaren Kanal der Vielzahl der elementaren Kanäle, auf denen die ersten Daten nicht moduliert werden, getrennt sind.

10. Eine Vorrichtung (12) zur Fern-Datenübertragung über ein Frequenzspektrum, das in eine Vielzahl von verschiedenen elementaren Kanälen unterteilt ist, **dadurch gekennzeichnet, dass** sie eine Schaltung aufweist, die in der Lage ist, ein erstes Signal zu übertragen, das eine Folge von ersten Daten aufweist, indem sie die ersten Daten gleichzeitig über eine Anzahl von elementaren Kanälen der Vielzahl von elementaren Kanälen moduliert und ein zweites Signal zu übertragen, das für einen Plan der Frequenzzuweisung der verwendeten elementaren Kanäle der Vielzahl von elementaren Kanälen für die Übertragung des ersten Signals repräsentativ ist, aufweisend eine Folge von zweiten Daten, zumindest durch Modulation aller zweiten Daten über einen elementaren Kanal aus der genannten Anzahl der elementaren Kanäle, wobei die Schaltung ferner angepasst ist, um vierte Daten zu übertragen, die für einen neuen Plan der Frequenzzuweisung der verwendeten elementaren Kanäle der Vielzahl der elementaren Kanäle durch Modulation auf dem genannten elementaren Kanal repräsentativ sind und für einen Zeitpunkt des Beginns der Nutzung des neuen Plans repräsentativ sind, und ab diesem Zeitpunkt fünfte Daten zu übertragen, die für den neuen Plan repräsentativ sind, durch Modulation der fünften Daten über einen neuen elementaren Kanal unterschiedlich von dem genannten elementaren Kanal.

11. Ein System (10) zur Fern-Datenübertragung über ein Frequenzspektrum, das in eine Vielzahl von elementaren Kanälen unterteilt ist, aufweisend mindestens eine erste Vorrichtung (12) nach Anspruch 10 und mindestens eine zweite Vorrichtung (14), die in der Lage ist, nacheinander für jeden elementaren Kanal aus mindestens gewissen elementaren Kanälen der Vielzahl von elementaren Kanälen zu bestimmen, ob alle zweiten Daten durch Modulation über den genannten elementaren Kanal übertragen wurden.

## Claims

1. A method of remote data transmission over a frequency spectrum divided into a plurality of different elementary channels, between a first device (12) and a second device (14), characterized it comprises the transmission by the first device of a first signal comprising a succession of first data by modulation of the first data simultaneously over a number of elementary channels of the plurality of elementary channels and the transmission of a second signal representative of a plan of frequency allocation of the used elementary channels of the plurality of elementary channels for the transmission of the first signal, comprising a succession of second data at least by modulation of all the second data over one elementary channel from among said number of elementary channels, the method further comprising a step of transmitting fourth data representative of a new plan of frequency allocation of the used elementary channels of the plurality of elementary channels by modulation on said elementary channel and representative of a time of beginning of use of the new plan and, from said time, transmitting fifth data representative of the new plan by modulation of the fifth data over a new elementary channel different from said elementary channel.

2. The method of claim 1, wherein the modulation is a multicarrier modulation.

3. The method of claim 1 or 2, wherein the second device (14) successively determines, for each elementary channel from among at least certain elementary channels of the plurality of elementary channels, whether all the second data have been transmitted by modulation over said elementary channel.

4. The method of any of claims 1 to 3, comprising transmitting the second signal independently by modulation of all the second data over each of at least two elementary channels from among the plurality of elementary channels.

5. The method of any of claims 1 to 4, wherein each elementary channel comprises carriers, the method comprising a step of determining first symbols based on first data, a step of distributing the first symbols over first carriers associated with the number of elementary channels of the plurality of elementary channels, and a step of modulating the first carriers with the first symbols, the method further comprising a step of determining second symbols based on the second data, a step of distributing the second symbols over at least second carriers associated with said elementary channel, and a step of modulating the second carriers with the second symbols.

6. The method of claim 5, comprising modulating the carriers other than the second carriers with a no-data-transmission symbol.

7. The method of claim 5, comprising modulating with the second symbols at least third carriers different from the second carriers and contained in an elementary channel different from said elementary channel.

8. The method of any of claims 1 to 7, wherein the modulation is an OFDM modulation, an FBMC modulation, or a UFMC modulation.

9. The method of any of claims 1 to 7, wherein at least two elementary channels of said number of elementary channels are separated by at least one elementary channel of the plurality of elementary channels on which the first data are not modulated.

10. A device (12) of remote data transmission over a frequency spectrum divided into a plurality of different elementary channels, characterized it comprises a circuit capable of transmitting a first signal comprising a succession of first data by modulation of the first data simultaneously over a number of elementary channels of the plurality of elementary channels and capable of transmitting a second signal representative of a plan of frequency allocation of the used elementary channels of the plurality of elementary channels for the transmission of the first signal, comprising a succession of second data at least by modulation of all the second data over one elementary channel from among said number of elementary channels, the circuit being further adapted to transmit fourth data representative of a new plan of frequency allocation of the used elementary channels of the plurality of elementary channels by modulation on said elementary channel and representative of a time of beginning of use of the new plan and, from said time, transmit fifth data representative of the new plan by modulation of the fifth data over a new elementary channel different from said elementary channel.

11. A system (10) of remote data transmission over a frequency spectrum divided into a plurality of elementary channels, comprising at least a first device (12) of claim 10 and at least a second device (14) capable of successively determining, for each elementary channel from among at least certain elementary channels of the plurality of elementary channels, whether all the second data have been transmitted by modulation over said elementary channel.
